# EUROPÄISCHE PATENTSCHRIFT

(11) **EP 4 094 820 B1**
(45) Veröffentlichungstag und Bekanntmachung des Hinweises auf die Patenterteilung: **09.04.2025**
(21) Anmeldenummer: 21176201.8
(22) Anmeldetag: 27.05.2021
(51) Int. Cl.: B01D 29/23, A61C 17/06, B01D 29/27, B01D 29/60

(54) **FILTEREINRICHTUNG ZUR FILTRATION VON SCHLEIFSTAUB UND BRILLENGLASSCHLEIFANLAGE UMFASSEND DIESELBE**
FILTER DEVICE FOR FILTERING GRINDING DUST AND EYEGLASS LENS GRINDING APPARATUS COMPRISING THE SAME
DISPOSITIF FILTRE DESTINÉ À LA FILTRATION DES POUSSIÈRES DE MEULAGE ET INSTALLATION DE MEULAGE DE VERRES LE COMPRENANT

(43) Veröffentlichungstag der Anmeldung: 30.11.2022
(73) Patentinhaber: Scherler, Matthias, 86720 Nördlingen (DE)
(72) Erfinder: Scherler, Matthias, 86720 Nördlingen (DE)
(74) Vertreter: Cremer & Cremer

(56) Entgegenhaltungen:
- CH-A2- 712 333
- DE-A1- 4 427 770
- US-A1- 2017 284 077
- US-B1- 6 306 293

## Beschreibung

Die vorliegende Erfindung betrifft eine Filtereinrichtung zur Filtration von Schleifstaub aus Schleifabwasser, insbesondere zur Filtration von Glasschleifstaub, wie er beim Nassschleifen von Brillenglas mit einer Brillenglasschleifvorrichtung entsteht, sowie eine Brillenglasanlage mit einer solchen Filtereinrichtung.

### Technisches Gebiet

Zur Herstellung von Brillenglas werden automatische Brillenglasschleifmaschinen verwendet, die eine Nasschleifvorrichtung zur Bearbeitung von Brillengläsern umfassen. Dabei werden pro Brillenglas während eines Schleifvorgangs ungefähr 15 Liter Wasser eingesetzt und Schleifstaub aus dem Schleifprozess wird im Wasser aufgefangen und mit diesem abgeführt. Üblicherweise wird nicht für jedes Brillenglas Frischwasser verwendet, sondern es wird Schleifabwasser aus vorhergehenden Schleifprozessen in der Brillenglasschleifmaschine gesammelt und wiederholt verwendet. Somit erfolgt in der Brillenglasschleifmaschine eine Schleifwasserzirkulation, wobei sich Schleifstaub und größere Partikel im Schleifabwasser anreichern. Von Zeit zu Zeit wird das Schleifwasser bzw. Schleifabwasser entsorgt und neues Wasser für die Nassschleifvorrichtung bereitgestellt. Bei der Entsorgung werden Schleifabfälle meist nur rudimentär entsorgt. Lediglich größere Partikel werden abgetrennt; Schleifstäube verbleiben im Abwasser und gelangen in die Kanalisation. Die Schleifstäube sind jedoch zum Teil hochgiftig und enthalten Mikropartikel, welche die Umwelt belasten. Beispielsweise verbleiben Schwermetalle, wie Blei und Zink, Toxine, wie Dioxine und Biphenyle, und Mikroplastikpartikel im Schleifabwasser zurück. Viele dieser Stoffe werden in herkömmlichen Abwasserkläranlagen nicht aus dem Wasser entfernt und gelangen in die Umwelt, wie durch wissenschaftliche Veröffentlichungen belegt wird, beispielsweise in «Eye-glass polishing wastewater as significant microplastic source: microplastic identification and quantification» von Jiuen Lee et al, Journal of Hazardous Materials 403 (2021) 123991.

### Stand der Technik

Bei bekannten Brillenglasschleifmaschinen werden die beim Schleifen als Abfall entstehenden Stäube und Partikel meistens nicht abfiltriert, sondern gelangen in das Abwasser. Allenfalls Grobpartikel und größere Stücke werden aufgefangen. Zur Entsorgung von Stäuben und Mikropartikeln werden im Stand der Technik Zentrifugen verwendet, die jedoch eine aufwendige Konstruktion aufweisen und daher sehr teuer sind.

Aus verwandten technischen Bereichen, wie etwa der Glasbearbeitung für den Gebäudebau, sind Wasseraufbereitungsverfahren bekannt, welche Wasserenthärtung, Umkehr-Osmose, Ionenaustausch, Membranverfahren oder Elektrodeionisation nutzen. Diese Verfahren sind jedoch ebenfalls sehr aufwendig und für kleine Wassermengen wenig geeignet. Zur Aufbereitung von kleineren Wassermengen, wie etwa bei der Staubsauger- oder Aquarientechnik, sind Textilfilter bekannt. Dabei wird mit Staub und dergleichen verunreinigtes Abwasser direkt auf die Filter geleitet und ein Textilmaterial siebt Partikel aus dem Abwasser heraus. Als Textilfiltermaterial wird z. B. Baumwolle verwendet. Bei derartigen Filtersystemen wird das Filtermaterial meist sehr ungleich mit Abwasser belastet und es werden Anpassungen im Prozess, durch den die Verunreinigungen entstehen, erforderlich. Für den Einsatz beim Optiker, welche üblicherweise die eingangs beschriebenen Brillenglasschleifmaschinen nutzen, ist keines der bekannten System nutzbar bzw. wie im Falle der Zentrifugen, zu teuer. US 6,306,293 B1, DE 44 27 770 A1, CH 712 333 A2 und US 2017/284077 A1 sind relevante Dokumente aus dem Stand der Technik.

### Aufgabenstellung

Es ist eine Aufgabe der vorliegenden Erfindung, eine Filtereinrichtung zur Filtration von Schleifstaub aus Schleifabwasser, insbesondere von Glasschleifstaub aus der Bearbeitung von Brillenglas, bereitzustellen, die einen einfachen Aufbau aufweist, mit wenigen Bauteilen auskommt, geringe bauliche Änderungen im Schleifprozess benötigt, eine einfache Wartung ermöglicht und kostengünstig zu betreiben ist. Ferner ist eine Aufgabe der Erfindung eine Brillenglasschleifanlage zu schaffen, die Umweltbelastungen durch Glasschleifstaub vermeidet und eine einfache Konstruktion aufweist.

### Erfindungsbeschreibung

Die erfindungsgemäße Aufgabe wird durch eine Filtereinrichtung nach Anspruch 1 und eine Brillenglasschleifanlage nach Anspruch 13 gelöst. Vorteilhafte Ausgestaltungen und Weiterbildungen lassen sich den abhängigen Ansprüchen entnehmen.

Eine Filtereinrichtung zur Filtration von Schleifstaub aus Schleifabwasser nach der vorliegenden Erfindung weist einen Zulauf zur Zuführung von Schleifabwasser zu einer Filtereinheit zur Filtration des Schleifabwassers sowie einen Behälter mit einer Behälteröffnung zum Einsetzen der Filtereinheit und einem Ablauf für gefiltertes Wasser auf. Ferner umfasst die Filtereinheit einen Filtersack aus textilem Material, der in eine Öffnung des Behälters einsetzbar und vorzugsweise auch aus dieser wieder entnehmbar ist. Der Filtersack weist eine Sacköffnung auf, durch die Schleifabwasser in den Filtersack gelangt.

Erfindungsgemäß weist die Filtereinrichtung eine Verrieselungsplatte mit einem Lochraster über der Sacköffnung auf. Das Lochraster erstreckt sich im Wesentlichen über die gesamte Fläche der Verrieselungsplatte. Der Zulauf der Filtereinrichtung mündet auf die Verrieselungsplatte, sodass Schleifabwasser verteilt auf der Verrieselungsplatte über das Lochraster in den Filtersack gelangt. Schleifstaub aus dem Schleifabwasser bleibt als Abraum im Filtersack zurück und gefiltertes Wasser gelangt durch das textile Material des Filtersacks in den Behälter, sodass es als gereinigtes Wasser wieder zur Verfügung steht und einer Brillenglasschleifmaschine erneut zugeführt werden kann.

Die Verrieselungsplatte ist vorzugsweise als ebene, horizontal angeordnete Fläche ausgebildet, auf der das Lochraster verteilt ist. Wird Schleifabwasser mittels des Zulaufs auf die Verrieselungsplatte geleitet, verteilt sich das Wasser auf der Fläche und rinnt durch das Lochraster. Somit wird das Schleifabwasser vorteilhaft über die gesamte Sacköffnung verteilt und über die gesamte Querschnittsfläche der Sacköffnung in den Filtersack eingerieselt. Das textile Material des Filtersacks wird dadurch großflächig mit Schleifabwasser benetzt und eine Konzentration von Schleifstaub auf nur einem Teilbereich des Filtersacks wird vermieden. Vorteilhaft weisen Löcher des Lochrasters einen Durchmesser auf, der kleiner ist als im Schleifabwasser enthaltene Grobpartikel, sodass diese Grobpartikel bereits von der Verrieselungsplatte zurückgehalten werden.

Die Filtereinrichtung nach der Erfindung ist insbesondere zur Filtration von Glasschleifstaub geeignet, der bei einem Nassschleifen von Brillenglas mit einer Brillenglasschleifvorrichtung anfällt. Beim Schleifen von Brillenglas fällt zum einen Schleifstaub mit giftigen Bestandteilen an, der durch das textile Material des Schleifsacks zuverlässig aus dem Schleifabwasser filtriert werden kann. Zum anderen fallen Grobpartikel an, die mit dem Schleifabwasser über der Verrieselungsplatte verteilt und von dieser zurückgehalten werden. Das beim Brillenglasschleifen üblicherweise anfallende Volumen an Schleifabwasser von ca. 15 Litern kann schnell und gleichmäßig über der Verrieselungsplatte verteilt werden. Schleifstaub aus diesem Volumen an Schleifabwasser kann in dem Filtersack gehalten werden, bis die gesamte Menge an Wasser durch das textile Material abgeflossen ist. Ein Austauschen des Filtersacks während eines Schleifprozesses ist nicht erforderlich. Es kann somit eine kontinuierliche Wasserreinigung während des Schleifens erfolgen.

In einer vorteilhaften Ausführung der Filtereinrichtung weist der Filtersack z. B. ein Volumen von ungefähr 30-60 l mit einer Sacköffnung mit einer Fläche von ca. 0,05-0,2 m², insbesondere 0,07-0,1 m², bevorzugt 0,08 m² auf. Der Filtersack ist bevorzugt quadratisch oder rechteckig im Querschnitt mit einer Grundfläche und damit Öffnungsgröße von ca. 30-80 cm x 20-50 cm.

Die Verrieselungsplatte ist entsprechend in der Größe angepasst. Das Lochraster weist in einer Ausführung Löcher einheitlicher Größe auf. Die Löcher weisen einen Durchmesser von 2-10 mm auf. Es ist auch möglich, das Lochraster mit Löchern unterschiedlicher Größe oder Formgebung auszubilden, sodass z. B. ein Durchlaufen von Schleifabwasser durch Löcher in einem mittleren Bereich weniger schnell erfolgt, als in einem Randbereich der Verrieselungsplatte. Dadurch wird ein Ablaufen durch Randbereiche begünstigt und Schleifabwasser wird auf eher außen liegende Bereiche des Filtersacks verteilt und weniger auf mittig liegende Bereiche. Da das Schleifabwasser im Filtersack entlang des textilen Materials dazu neigt, hin zum mittigen Bereich zu fließen, kann damit eine gleichmäßige Ausnutzung der Filtersackbereiche begünstigt werden.

Es sei darauf hingewiesen, dass die gesamte Filtereinrichtung in ihrer Größe skalierbar ist. Sie kann und muss in ihren Abmessungen an die zu filtrierende Wassermenge angepasst werden, welche wiederum abhängig ist von der Brillenglasschleifmaschine, der sie zugeordnet ist. Sollen beispielsweise mit einer Anlage die Abwässer mehrerer Schleifmaschinen gereinigt werden, so kann die Filtereinrichtung entsprechend größer ausgelegt werden. Die in der vorliegenden Anmeldung angegebenen Größenangaben sind als Ausführungsbeispiele, die sich unter den getesteten Bedingungen als besonders günstig herausstellten, zu verstehen.

Durch das Einrieseln des Schleifabwassers in den Filtersack mit Hilfe des Lochrasters der Verrieselungsplatte anstelle eines üblichen Einfließens mittels eines Schleifabwasserzulaufs entsteht nur eine geringe Aufwirbelung des Schleifabwassers und des Abraums im Filtersack. Somit wird durch die Verwendung der Verrieselungsplatte eine Sedimentierung des Abraums im Filtersack unterstützt.

Der Aufbau der Filtereinrichtung nach der Erfindung kommt mit nur wenigen Bauteilen aus, die in einfacher Weise miteinander kombiniert sind.

Die Wartung der Filtereinrichtung ist unkompliziert. Es muss lediglich die Verrieselungsplatte abgenommen werden, um den Filtersack zu entnehmen und auszutauschen bzw. zu reinigen und wieder einzusetzen. In der Praxis erwies es sich als geschickt, zwei Säcke im Wechsel zu benutzen und alle 2-4 Wochen zu wechseln. Der volle Sack wird getrocknet, z. B. luftgetrocknet, und nach dem Trocknen über den Hausmüll entsorgt. Nach dem Trocknen kann der Sackinhalt, auch Abraum zu nennen, einfach in einen Müllsack geschüttet werden. Anschließend kann der Sack wieder verwendet werden.

Zuführungsbereiche für das Schleifabwasser sind leicht zugänglich und können ggf. manuell gereinigt werden, falls erforderlich. Der Zulauf für das Schleifabwasser kann im Wesentlichen an beliebiger Stelle über der Verrieselungsplatte erfolgen.

In einer Ausführung wird das gefilterte Wasser im Behälter gesammelt und über den Ablauf abgeführt. Bevorzugterweise wird das gereinigte Wasser der Brillenglasschleifmaschine als Schleifwasser wieder zugeführt und befindet sich so im Umlauf. Alternativ könnte das gefilterte Wasser über die Behälteröffnung abgeführt werden.

Die Filtereinheit kann als Modul bei bestehenden Schleifvorrichtungen ergänzt werden oder als Baueinheit in eine Schleifvorrichtung integriert werden. Dabei wird die Filtereinrichtung lediglich an den Auslass für Schleifabwasser und über den Ablauf an den Einlass für Schleifwasser angeschlossen. Es sind keine baulichen Veränderungen der Schleifmaschinen selbst notwendig.

Bei einer vorteilhaften Ausführungsform der Filtereinrichtung nach der Erfindung sind der Zulauf, die Verrieselungsplatte, der Filtersack und der Behälter in Richtung der Schwerkraft untereinander derart angeordnet, dass eine Schwerkraftfiltration vorliegt. Demnach wird Schleifabwasser von oben auf die Verrieselungsplatte geleitet und durch Schwerkraft und Adhäsionskräfte des Wassers gleichmäßig auf der Platte verteilt. Durch Gravitation tropft das Schleifabwasser durch die Löcher des Lochrasters senkrecht in den Filtersack und verteilt sich dabei auf eine große Fläche des textilen Materials. Ebenfalls durch Gravitation sickert das Schleifabwasser durch das textile Material hindurch, wobei der Schleifstaub im Material zurückgehalten wird und das filtrierte Wasser letztlich durch Schwerkraft in den Behälter tropft. Für die Filtereinrichtung nach der Erfindung sind keine Pumpen oder dergleichen zur Beförderung des Wassers durch die Filtereinheit notwendig.

In einer Variante der Filtereinrichtung nach der Erfindung entsprechen die Sacköffnung und die Fläche der Verrieselungsplatte im Wesentlichen der Behälteröffnung. Vorzugsweise befindet sich die Behälteröffnung im Wesentlichen auf einer Oberseite des Behälters und erstreckt sich über zumindest den überwiegenden Teil der Behälteroberseite. Entsprechend erstreckt sich das Lochraster der Verrieselungsplatte über zumindest den überwiegenden Teil der Behälteroberseite. Vorteilhaft ist die Fläche der Oberseite des Behälters größer als eine Seitenfläche des Behälters. Somit können eine großflächige Verrieselung mittels der Verrieselungsplatte und ein großflächiges Filtrieren mittels des textilen Materials erfolgen. Großflächig soll hierbei derart verstanden werden, dass ein Durchmesser der Fläche, über die ein Einrieseln in den Filtersack erfolgt, zumindest gleich groß, vorzugsweise größer ist, als eine Höhe des Behälters.

Erfindungsgemäß ist die Verrieselungsplatte schalenartig zur Aufnahme einer vorbestimmten Menge an Schleifabwasser ausgebildet. Hierfür kann die Verrieselungsplatte beispielsweise einen Umfangsrand aufweisen, der eine vertikale Begrenzung der Oberfläche der Verrieselungsplatte bildet. Die Schalenform dient zum Verteilen des Schleifstaubs über dem Lochraster und als eine Art Puffer bei starkem Zulauf von Schleifabwasser. Die auf der Verrieselungsplatte zurückgehaltene vorbestimmte Menge kann auf übliche Mengen an zulaufendem Wasser abgestimmt werden. Beispielsweise kann eine Verrieselungsplatte in Form einer Schale ein Wasservolumen von 3-5 l aufnehmen.

Bei einer weiteren vorteilhaften Ausführungsform der Filtereinrichtung nach der Erfindung ist ein Filtereinsatz aus festem Material mit Schlitzen vorgesehen, der in dem Behälter angeordnet ist und der den Filtersack aufnimmt. Der Filtereinsatz ist somit zwischen Filtersack und Behälter angeordnet, so dass filtriertes Wasser aus dem Filtersack durch die Schlitze des Filtereinsatzes in den Behälter fließt. Der Filtereinsatz kann z. B. aus Metall oder Kunststoff gefertigt sein, wobei in der bevorzugten Ausführungsform Edelstahl verwendet wird, und kann aus dem Behälter entnommen werden.

Der Filtereinsatz weist vorzugsweise eine Form entsprechend der Form des Behälters auf, ist aber bevorzugt etwas kleiner und hält einen Abstand zu einer Bodenseite des Behälters. Der Abstand zum Boden kann gewahrt werden durch das Vorsehen von zumindest einem Abstandshalter auf der Unterseite des Filtereinsatzes. Die Abstandshalter können im Boden des Behälters integriert sein, am Filtereinsatz 16 angeformt sein oder als separate Bauteile zur Verfügung stehen. Bevorzugt sind die Abstandshalter dadurch realisiert, dass zumindest zwei gegenüberliegende Seitenwände über die Unterseite des Filtereinsatzes hinaus verlängert sind, also über den Boden desselben hinausstehen. Man könnte auch sagen, dass der Filtereinsatz unterseitig zwei Kufen aufweist. In einer alternativen Ausführungsform wird der Abstand gewahrt, indem ein oberer Rand des Filtereinsatzes umgebördelt ist, also einen verbreiterten Rand aufweist, so dass der Filtereinsatz mit dem oberen Rand auf einer Oberkante des Behälters aufliegt, und indem eine Außenhöhe des Filtereinsatzes kleiner ist als eine Innenhöhe des Behälters. Der Filtereinsatz hängt auf diese Weise im Behälter, ohne dessen Boden zu berühren.

Gleichzeitig ist der Filtereinsatz etwas kleiner im Querschnitt als der Behälter, so dass er in demselben so eingesetzt ist, dass die Filtereinsatzwand die Behälterwand nicht berührt, sondern einen Abstand zu derselben hält. An der Außenseite der Seitenwände des Filtereinsatzes und/oder an der Innenseite der Behälterwände können Abstandshalter vorgesehen sein, wodurch der Filtereinsatz gleichmäßig und zuverlässig von der Behälterwand ferngehalten wird.

In einer besonders bevorzugten Ausführung ist die Umfangskante des Filtereinsatzes so dimensioniert, dass sie in den Behälter vollständig eingeführt wird und der obere Rand des Filtereinsatzes niedriger liegt als der obere Rand des Behälters. Das hat den Vorteil, dass es an der Oberkante des Filtereinsatzes eine weitere Redundanz beim Ablauf gibt, für den Fall, dass Rieselplatte und Grobfilter verstopft sind. Hier kann das Wasser dann am Filtersack vorbei in Behälter einlaufen.

In einer weiteren alternativen Ausführung fixiert die Umfangskante des Filtereinsatzes den Sack per Formschluss, da im Bund des Sackes ein Gummiseil eingearbeitet ist. Dies bringt auch Vorteile beim Wechsel des Sackes mit sich, da die bereits aufgezogenen Teile des Sackbundes von selbst über dem Filtereinsatz halten und die übrigen Teile einfach aufgezogen werden können.

Die Schlitze sind auf der einen Seite so groß, dass durch den Filtersack sickerndes gereinigtes Wasser durch den Filtereinsatz in den Behälter ablaufen kann. Andererseits sind sie aber klein genug, so dass der Filtersack in dem Filtereinsatz so gehalten wird, dass das Filtermaterial nicht an der Behälterwand anliegt. Die Schlitze weisen vorteilhaft eine Größe von 1-5 mm x 3-50 mm und eine quadratische oder rechteckige, insbesondere längliche Form auf.

Im Zwischenbereich zwischen Behälterboden und Filtereinsatzunterseite kann das gefilterte Wasser gesammelt werden, ohne dass es den Filtersack berührt. Der Filtereinsatz kann einen unteren Bereich des Filtersacks stützen, sodass das textile Material eine ebene untere Fläche ausbildet. Ohne eine Abstützung neigt das textile Material dazu U-förmig im Behälter zu hängen, sodass sich Schleifabwasser vermehrt im mittleren Sackbereich ansammeln könnte.

Der Ablauf aus dem Behälter ist bevorzugt seitlich angebracht, mit einem gewissen Abstand zum Boden des Behälters. Dadurch setzen sich evtl. noch im bereits durch den Filtersack gefilterten Wasser vorhandene Kleinstteile durch Sedimentation auf dem Behälterboden ab und können bei einer Reinigung der Filtervorrichtung entnommen und entsorgt werden.

Bei noch einer weiteren vorteilhaften Ausführungsform der Filtereinrichtung nach der Erfindung ist ein Überlauf vorgesehen, über den eine Überschussmenge an zulaufendem Wasser von der Verrieselungsplatte, bzw. aus der Schale der Verrieselungsplatte, ableitbar ist. Der Überlauf kann das überschüssige Schleifabwasser beispielsweise durch einen Abfluss direkt zur Kanalisation leiten oder die Überschussmenge in einem Überschussbehälter auffangen, so dass sie zu einem späteren Zeitpunkt der Filtereinheit zugeführt werden kann. Alternativ kann die Überschussmenge auch direkt der Schleifmaschine wieder zugeführt werden; Grobpartikel wurden zuvor abgetrennt. Beim nächsten Durchlauf wird das Schleifabwasser der Filtervorrichtung wieder zugeführt und wird dann gereinigt.

Der Überlauf kann beispielsweise als Schlauch oder Rohr ausgebildet sein, dessen Einflussöffnung eine vorbestimmte Höhe über der Lochrasterfläche aber unterhalb einer Oberkante eines Umfangsrandes der Verrieselungsplatte liegt. Somit wird verhindert, dass Schleifabwasser unkontrolliert von der Verrieselungsplatte abläuft. Zudem kann sich der Überlauf ausgehend von der Verrieselungsplatte durch den Behälter erstrecken und in eine Durchgangsöffnung im Behälter münden. Die Durchgangsöffnung kann dann den Abfluss bilden oder in den Abfluss bzw. das Wasserreservoir münden, aus welchem Wasser der Schleifmaschine zugeführt wird. Der Überlauf kann fest mit dem Behälter verbunden sein und sich von einer Bodenseite des Behälters, welche die Durchgangsöffnung aufweist, direkt nach oben erstrecken. Die Verrieselungsplatte kann eine Aussparung innerhalb ihrer Lochrasterfläche aufweisen, durch die sich der Überlauf in den Schalenbereich der Verrieselungsplatte erstrecken kann. Vorteilhaft weist der Überlauf an seinem Einlass für das Schleifabwasser eine Grobfiltereinheit auf, die Grobpartikel aus dem Schleifabwasser zurückhält. Die Grobfiltereinheit verhindert somit ein Abfließen von großen Partikeln in die Kanalisation bzw. das Wasserreservoir und vermeidet ein Verstopfen des Überlaufs und verhindert, dass Grobpartikel den Schleifvorgang stören könnten.

Vorteilhaft weist der Filtersack einen schlauchartigen Fortsatz auf, durch den sich der Überlauf innerhalb des Behälters erstrecken kann. Der Fortsatz ragt als eine Art Ärmel von einem inneren Bereich des Filtersacks ab. Wird der Filtersack in den Behälter eingesetzt, kann der Fortsatz den Überlauf aufnehmen und sich von der Verrieselungsplatte nach unten zum Boden des Sacks erstrecken. Damit ist sichergestellt, dass der Filtersack das gesamte von der Verrieselungsplatte verrieselte Schleifabwasser aufnehmen und filtrieren kann.

Nach wiederum einer weiteren Ausführungsform der Filtereinrichtung nach der vorliegenden Erfindung kann die Verrieselungsplatte eine Reinigungsöffnung aufweisen. Bevorzugt ist überdies ein Schieber vorgesehen, mit welchem die Oberfläche der Verrieselungsplatte gereinigt werden kann. Mit dem Schieber kann die Oberfläche der Verrieselungsplatte und somit das Lochraster gereinigt werden, indem der Schieber größere Verunreinigungen, die nicht durch das Lochraster passen, in Richtung der Reinigungsöffnung und durch diese hindurch von der Verrieselungsplatte schiebt. Der Schieber kann ein gesondertes Teil sein und über die Oberseite der Verrieselungsplatte verschiebbar sein. In einer bevorzugten Ausführung ist der Schieber als Teil des Grobfilters ausgebildet. Der Grobfilter ist axial drehbar, wodurch der Schieber um die Reinigungsöffnung herum bewegt wird, wodurch dort vorhandene Grobpartikel verschoben werden.

Vorteilhaft mündet die Reinigungsöffnung in den Filtersack, sodass die durch den Schieber beseitigten Verunreinigungen ebenfalls in dem Filtersack gesammelt werden. Vorteilhaft weist die Reinigungsöffnung einen Verschluss auf, der geöffnet werden kann, wenn die Verrieselungsplatte mit dem Schieber gereinigt werden soll. In einer Variante können Verunreinigungen, die in der Grobfiltereinheit des Überlaufs, wie oben beschrieben, zurückgehalten werden, ebenfalls über die Reinigungsöffnung durch die Verrieselungsplatte in den Filtersack gelangen. Somit können alle Verunreinigungen und Schleifstaub aus dem Schleifabwasser im Filtersack gemeinsam gesammelt werden.

Die Reinigungsöffnung und die Öffnung in der Verrieselungsplatte für den Überlauf können zusammenfallen.

Alternativ oder zusätzlich kann die Reinigungsöffnung in der Verrieselungsplatte einen Grobfilter, beispielsweise in Form eines Rechens, aufweisen. Der Grobfilter fängt Grobpartikelabfall auf, sodass der Filtersack vor zu großen und möglicherweise scharfkantigen Abfallpartikeln geschützt wird.

Nach noch einer weiteren Ausführung ist für den Behälter ein Deckel vorgesehen, welcher eine Möglichkeit schafft, einen Flansch für eine Luftabsaugung zu installieren.

In einer Variante der Filtereinrichtung nach der Erfindung besteht das textile Material des Filtersacks aus einem Kunstfasergewebe. Insbesondere ein Polyestergewebe in Köperbindung (beispielsweise von IBENA Technische Textilien, 46414 Rhede, Deutschland, Produktnummer 8555) oder ein vergleichbares Nylongewebe erwiesen sich als textile Materialien für den Filtersack als geeignet. Ein Polyestergewebe hat den Vorteil, dass es sich, anders als Naturfasern wie Baumwolle, nicht mit Wasser vollsaugt und darauf anhaftende Partikel beim Reinigen der Vorrichtung sich leicht ablösen lassen.

Nach einem weiteren Aspekt der vorliegenden Erfindung ist eine Brillenglasschleifanlage zum Nassschleifen von Brillenglas vorgesehen, die eine Filtereinrichtung zur Filtration von Schleifstaub aus Schleifabwasser umfasst, welches beim Schleifen von Brillenglas mit der Brillenglasschleifanlage entsteht, wie oben beschrieben. Die erfindungsgemäße Brillenglasschleifanlage weist einen einfachen Aufbau auf, da die Filtereinrichtung als unabhängig funktionierendes Modul mit ihrem Schleifabwasserzulauf an einen Schleifabwasserablauf einer herkömmlichen Brillenglasschleifmaschine angeschlossen werden kann. Die Filtereinrichtung beeinträchtigt den Schleifprozess nicht und ist einfach zu warten.

In einer Ausführungsform umfasst die Brillenglasschleifanlage wenigstens eine Brillenglasschleifeinheit zum Nassschleifen von Brillenglas, ein Wasserreservoir zur Versorgung der Brillenglasschleifeinheit mit Schleifwasser, zumindest eine Pumpe zur Zuführung von Schleifwasser aus dem Wasserreservoir zur Brillenglasschleifeinheit, einen Schleifabwasserablauf und die Filtereinrichtung mit dem Behälter zum Auffangen von gefiltertem Wasser, die an den Schleifabwasserablauf angeschlossen ist. Manche Schleifsysteme verwenden zwei Pumpen, damit bei Bedarf die Wassermenge besser geregelt werden kann. In einem solchen Fall sind zwei Pumpen in der erfindungsgemäßen Brillenglasschleifanlage vorgesehen.

Erfindungsgemäß kann der Behälter der Filtereinrichtung wenigstens einen Teil des Wasserreservoirs zur Versorgung der Brillenglasschleifeinheit mit Schleifwasser bilden. Dabei kann das gefilterte Wasser aus dem Behälter in einen Reservoirbehälter geführt werden oder das gefilterte Wasser kann der Brillenglasschleifeinheit direkt aus dem Behälter der Filtereinrichtung zur Verfügung gestellt werden. Somit trägt das von der Filtereinrichtung gefilterte Schleifabwasser zum Betrieb der Brillenglasschleifvorrichtung bei und ermöglicht einen kontinuierlichen Wasserkreislauf für mehrere bis viele Schleifvorgänge mit der Brillenglasschleifanlage. Dadurch kann Wasser gespart und die Umwelt entlastet werden.

Wie bereits oben erläutert, kann es vorkommen, dass große Wasservolumina anfallen oder dass die Filtereinheit verstopft ist. In beiden Fällen gelangt unfiltriertes oder nur grob filtriertes Schleifabwasser in den unteren Behälter, also in das Wasserreservoir. In einer Ausführung ist deshalb vorgesehen, dass in dem Behälter, welcher das Wasserreservoir bildet, eine Strömungspumpe vorgesehen ist, die eine Sedimentierung des Schleifschlamms erschwert, welcher bei großen Wasservolumina über den Überlauf in das Wasserreservoir gelangen kann.

Die vorliegende Erfindung hat den großen Vorteil, dass sie einfach im Aufbau und in der Handhabung ist, verhältnismäßig wenig Wartungsaufwand erfordert - es müssen lediglich, natürlich in Abhängigkeit der Anzahl an Schleifvorgängen, von Zeit zu Zeit, z. B. alle 4-10 Wochen der Filtersack gereinigt werden, und z. B. einmal pro Woche mit einem Schieber Grobpartikel von der Verrieselungsplatte entfernt werden - und kostengünstig ist. Selbst Optiker mit nur einem geringen Umsatz können sich die Filtervorrichtung leisten und so einen großen Beitrag zum Gewässerschutz leisten. Es sind außerdem keine größeren Umbauten vor Ort nötig; die Filtervorrichtung kann an jede handelsübliche Brillenglasnassschleifmaschine angeschlossen werden. Trotzdem hat sich herausgestellt, dass die Filtervorrichtung äußerst effizient filtriert. Der Erfinder und Anmelder hat Wasserproben des gereinigten Abwasser untersuchen lassen und es wurde festgestellt, dass das Wasser ohne sichtbare Verunreinigungen ist.

Es zeigte sich, dass gleichbleibend eine sehr gute Wasserqualität gewährleistet wird, wodurch bessere Schleifergebnisse, weniger Verdrehung der Brillengläser bei der Bearbeitung sowie exzellente Ergebnisse im Poliermodus der Brillengläser vorliegen. Es erspart sich ein kompletter Wasserwechsel innerhalb des Systems wie bei herkömmlichen Systemen. Stattdessen muss nur das durch Verdunstung "verschwindende" Wasser aufgefüllt werden.

Es sei ergänzend erwähnt, dass mit der Filtereinrichtung Schleifabfälle sämtlicher marktüblichen Brillenglasmaterialien, wie z. B. mineralische Gläser aller Brechungsindizes sowie organische Brillengläser (PMMA (Polymethylmethacrylat, Acryl, Polycarbonat, Trivex (Spezialkunststoff auf Polyurethanbasis), behandelt werden können.

### Figurenkurzbeschreibung

Die vorliegende Erfindung ist mit Bezug auf die beiliegenden Figuren leichter verständlich, die beispielhaft eine vorteilhafte Ausgestaltungsmöglichkeit der Filtereinrichtung und der Brillenglasschleifanlage darlegen, ohne die vorliegende Erfindung auf diese einzuschränken. Die Figuren zeigen:
- Figur 1:: eine Explosionsdarstellung einer Filtereinrichtung nach der vorliegenden Erfindung; und
- Figur 2:: eine dreidimensionale schematische Ansicht einer Brillenglasschleifanlage nach

Um Wiederholungen in den Figuren und der zugehörigen Beschreibung der verschiedenen Aspekte der Erfindung zu vermeiden, sollen bestimmte Merkmale als gemeinsam für verschieden Aspekte und Ausführungsbeispiele verstanden werden. Das Weglassen eines Aspekts in der Beschreibung oder einer Figur lässt nicht darauf schließen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung Folgendes: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in verschiedenen Figuren stehen für ähnliche oder gleiche Elemente.

In der nachfolgenden Beschreibung werden bestimmte Ausdrücke wie "unten", "oben", "unterhalb", "oberhalb", "über", "unter", "darunter", "darüber", "vertikal", "Höhe", "Tiefe", etc. in Bezug auf eine Anordnung oder Ausdehnung von Bauelementen innerhalb eines Schwerefelds verwendet. Ein Bauelement das über einem anderen Bauelement angeordnet ist, hat demnach eine höhere Lageenergie als das darunter angeordnete Bauelement. Andere Ausdrücke wie "rechts", "links", "innen", "außen", etc. werden aus praktischen Gründen verwendet und sind nicht einschränkend zu verstehen. Diese werden zur Beschreibung der Anordnung bezeichneter Bauelemente zueinander oder der Bewegung bezeichneter Bauelemente zueinander wie in den Figuren dargestellt verwendet.

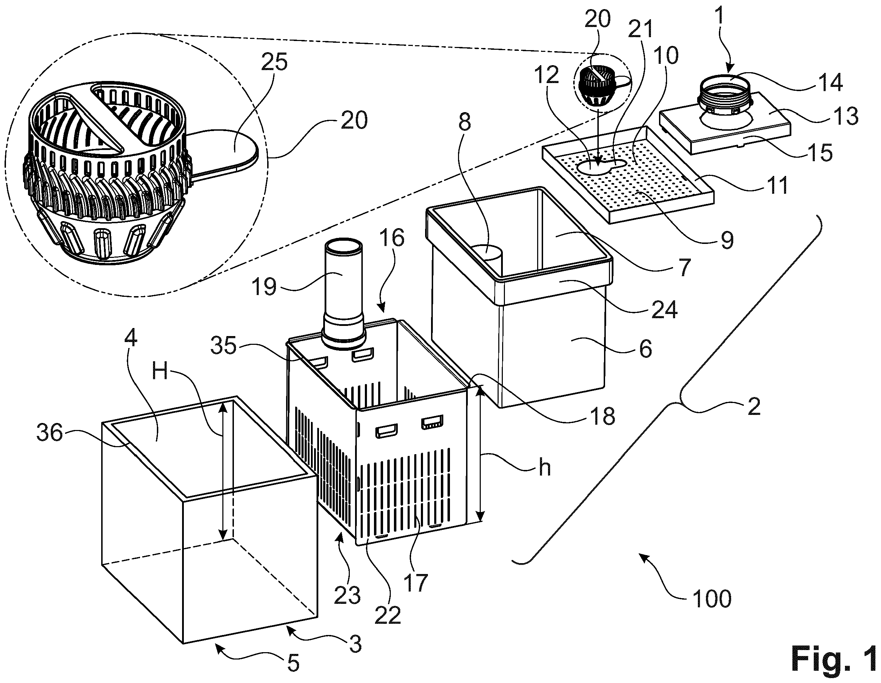

Figur 1 zeigt eine Ausführungsform einer erfindungsgemäßen Filtereinrichtung 100 zur Filtration von Schleifstaub aus Schleifabwasser, insbesondere von Glasschleifstaub aus Brillenglasschleifvorgängen, nach der vorliegenden Erfindung. Die Filtereinrichtung 100 weist einen Zulauf 1 zur Zuführung von Schleifabwasser zu einer Filtereinheit 2 zur Filtration des Schleifabwassers sowie einen Behälter 3 mit einer Behälteröffnung 4 zum Einsetzen der Filtereinheit 2 und einem Ablauf 5 für gefiltertes Wasser auf. Der Behälter 3 weist eine im Wesentlichen kastenartige Form auf. An seiner Oberseite ist der Behälter offen, wodurch sich die Behälteröffnung 4 ausbildet. Der Ablauf 5 ist im oder in einem seitlichen Bodenbereich des Behälters 3 angeordnet. Grundsätzlich könnte der Behälter auch eine andere Form aufweisen, beispielsweise zylindrisch. Dabei ist es vorteilhaft, wenn zumindest nahezu eine gesamte Oberseite als Behälteröffnung 4 dienen kann.

Der obere Rand 35 des Filtereinsatzes 16 ist abgekantet oder umgebördelt, wodurch eine Umfangskante 18 gebildet wird.

Der Filtereinsatz 16 ist außen niedriger - Höhe h - als die Behälterinnenhöhe H. Die Außenhöhe h beträgt in einer bevorzugten Ausführung zwischen 280 und 400 mm, insbesondere zwischen 300 und 350 mm; die Innenhöhe H des Behälters beträgt entsprechend weniger, z. B. ist h = 305 mm und H = 320 mm.

Ebenso ist der Filtereinsatz 16 in seinen Außenquerschnittsmaßen kleiner als der Innenquerschnitt des Behälters 3, so dass der eingesetzte Filtereinsatz 16 allseitig einen Abstand zur Behälterinnenwandung hält.

Ferner ist der Filtereinsatz 16 vollständig im Behälter 3 aufgenommen und im eingesetzten Zustand der obere Rand 35 des Filtereinsatzes 16 niedriger liegend als die Oberkante 36 des Behälters 3. Die Umfangskante 18 des Filtereinsatzes 16 ist so dimensioniert, dass sie in den Behälter 3 vollständig eingeführt wird.

Die Filtereinheit 2 umfasst einen Filtersack 6 aus textilem Material mit einer Sacköffnung 7 und einem Fortsatz 8. Der Filtersack 6 weist im Wesentlichen die gleiche Formgebung wie der Behälter 3 auf, kann aber etwas kleiner ausgebildet sein und ist vor allem weniger hoch bzw. tief. Die Sacköffnung 7 erstreckt sich über den Querschnitt des Filtersacks, so dass sich ein großer Öffnungsbereich ergibt. Der Fortsatz 8 bildet einen Durchgangskanal durch das Innere des Filtersacks 6. Der Fortsatz 8 erstreckt sich von der Sacköffnung 7 bis zum Boden des Filtersacks. Der Fortsatz ist als eine Art Ärmel am Filtersack 6 ausgebildet. Der Durchgangskanal des Fortsatzes 8 dient zur Aufnahme eines Überlaufs, wie nachfolgend erläutert wird. Das textile Material des Filtersacks 6 besteht vorzugsweise aus Polyestergewebe. Die Umfangskante 18 des Filtereinsatzes 16 fixiert den Filtersack 6 per Formschluss am Filtereinsatz 16, da im Bund 24 des Sackes ein Gummiseil eingearbeitet ist.

Weiter weist die Filtereinrichtung 2 eine Verrieselungsplatte 9 mit einem Lochraster 10, einem Umfangsrand 11 und einer Aussparung 12 auf. Die Verrieselungsplatte 9 weist somit die Form einer Schale auf. Das Lochraster 10 besteht in dieser Ausführungsform aus einer Vielzahl von Löchern, die in regelmäßigen Reihen und Abständen in einer horizontal ausgerichteten Fläche der Verrieselungsplatte 9 eingebracht sind. Die Löcher weisen vorzugsweise einen Durchmesser von zwischen 2 und 10 mm auf. Der Umfangsrand 11 erstreckt sich entlang einer Außenkante der Fläche der Verrieselungsplatte 9 und senkrecht zu dieser Fläche nach oben. Die Höhe des Umfangsrands 11 beträgt zwischen 1 und 5 cm. Die Abmessungen der Verrieselungsplatte 9 entsprechen im Wesentlichen denjenigen der Behälteröffnung 4, sodass die Verrieselungsplatte 9 die Behälteröffnung 4 abdecken kann. Weiter deckt die Verrieselungsplatte 9 die Sacköffnung 7 im Wesentlichen ab. Die Verrieselungsplatte 9 wird auf den Filtereinsatz 16 aufgesetzt. Ist kein Filtereinsatz 16 vorhanden, wobei der Filtersack 6 im Behälter 3 hängt, so wird die Verrieselungsplatte 9 direkt auf den Behälter 3 aufgesetzt. In einer bevorzugten, nicht dargestellten Ausführung sind an den Innenwänden des Filtereinsatzes 16 seitlich mehrere Laschen angebracht. Auf diesen Laschen, die vorsprungartig von den Innenwänden vorstehen, liegt die Verrieselungsplatte 9 auf.

Der Zulauf 1 wird mit Hilfe eines Einlaufs 13 über dem Lochraster 10 der Verrieselungsplatte 9 positioniert. Der Einlauf 13 weist hierfür eine Tragfläche mit einem Einlaufflansch 14 und von der Tragfläche nach unten abragende seitliche Stützen 15 auf, welche die Tragfläche und damit den Einlauf 13 über dem Lochraster abstützen. Der Zulauf 1, beispielsweise in Form eines Kunststoffschlauchs, kann dann in üblicher Weise an den Einlaufflansch 14 angeschlossen werden, beispielsweise durch Formschluss oder mit einer Schelle. Schleifabwasser wird dann durch den Zulauf 1 und den Einlaufflansch 14 über dem Lochraster 10 auf die Verrieselungsplatte 9 geleitet. Dadurch wird das Schleifabwasser über das Lochraster verteilt und rieselt durch die Löcher des Rasters.

Weiter weist diese bevorzugte Ausführungsform einer erfindungsgemäßen Filtereinrichtung, die Filtereinrichtung 100, einen Filtereinsatz 16 mit vertikal verlaufenden Schlitzen 17 auf. Der Filtereinsatz 16 weist eine vergleichbare Formgebung auf wie der Behälter 3. Er ist kastenartig oder korbartig mit einer offenen Oberseite ausgebildet. Die Abmessungen des Filtereinsatzes 16 sind etwas geringer als die Abmessungen des Behälters 3, um den Filtereinsatz 16 in den Behälter 3 einsetzen und einen Abstand zu den Wänden und zum Boden des Behälters 3 halten zu können, wie bereits zuvor erläutert. Der Filtereinsatz 16 ist weniger tief als der Behälter 3 - die Höhe h ist geringer als die Höhe H, wie ebenfalls zuvor erläutert, damit, für den Fall, dass Filtersack und Grobfilter verstopft sind, das Schleifabwasser in den Behälter laufen kann, ohne dass es überläuft und auf den Boden läuft.

Zu dem Boden des Behälters 3 hin sind auf einer Unterseite des Filtereinsatzes 16, in der Fig. 1 als Boden 23 bezeichnet, Abstandshalter 22 vorgesehen, die den Filtereinsatz 16 in einem Abstand über dem Boden des Behälters 3 halten. In der gezeigten Ausführung sind die Abstandshalter kufenartig dadurch ausgebildet, dass zwei gegenüberliegende Seitenwände nach unten hin über den Boden 23 hinaus verlängert sind.

Der Filtereinsatz 16 nimmt den Filtersack 6 in sich auf. Dabei wird ein Rand der Sacköffnung 7, vorliegend als Bund 24 bezeichnet, an der Umfangskante 18 des Filtereinsatzes 16 gehalten, so dass die offene Oberseite des Filtereinsatzes 16 von dem Filtersack 6 abgedeckt ist. Hierfür kann z. B. der Rand der Sacköffnung 7 über die Umfangskante 18 gestülpt werden. Ein in dem Bund 24 vorhandenes Gummi sorgt für einen Formschluss. Alternativ ist vorgesehen, dass die Sacköffnung 7 durch einen Rahmen aufgespannt sein kann, der auf oder in der Umfangskante 18 des Filtereinsatzes 16 auf- bzw. eingesetzt wird.

Die Verrieselungsplatte 9 kann wiederum auf der Umfangskante 18 des Filtereinsatzes 16 aufgesetzt oder darin eingesetzt werden oder in oder an dem Rand der Sacköffnung 7 angeordnet werden. Die Verrieselungsplatte 9, der Filtersack 6 und der Filtereinsatz 16 bilden somit eine Einheit, die in den Behälter eingesetzt werden kann. Die Tiefe des Filtersacks 6 entspricht zumindest nahezu der Tiefe des Filtereinsatzes 16. Der Filtereinsatz 16 kann somit den unteren Bereich des Filtersacks 6 stützen. Der untere Bereich kann daher flächig verlaufen, auch wenn das Gewicht von Abraum und Schleifabwasser auf den Sack wirkt. Dadurch kann eine gleichmäßige Sedimentation im Filtersack erfolgen.

Grundsätzlich kann der Filtersack 6 auch direkt in den Behälter 3 eingesetzt werden, ohne den Filtereinsatz 16 zu verwenden. In diesem Fall kann der Rand der Sacköffnung 7 analog zur Anordnung am Filtereinsatz 16 an der Behälteröffnung 4 des Behälters 3 gehalten werden und die Behälteröffnung 4 abdecken.

In der Ausführungsform der Filtereinrichtung 100 nach Figur 1 ist ein Überlauf 19 in Form eines Rohres vorgesehen, der innerhalb des Behälters 3 angeordnet ist. Der Überlauf 19 ist an beiden Enden offen und erstreckt sich von einer Durchgangsöffnung (nicht gezeigt) im Boden des Behälters 3 vertikal nach oben zur Verrieselungsplatte 9 und durch einen Teilbereich der Aussparung 12 hindurch, sodass der Überlauf 19 über das Lochraster 10 hervorsteht. Der Überlauf 19 endet jedoch unterhalb der Oberkante des Umfangsrandes 11. Dabei erstreckt sich der Überlauf 19 durch den Fortsatz 8 des Filtersacks 6, sodass der Innenraum des Filtereinsatzes 16, bzw. des Behälters 3 falls kein Filtereinsatz 16 vorhanden ist, an allen vertikalen Seiten und am Boden mit textilem Material des Filtersacks 6 ausgekleidet ist. Oben wird der Innenraum des Filtersacks 6 mit der Verrieselungsplatte 9 abgeschlossen.

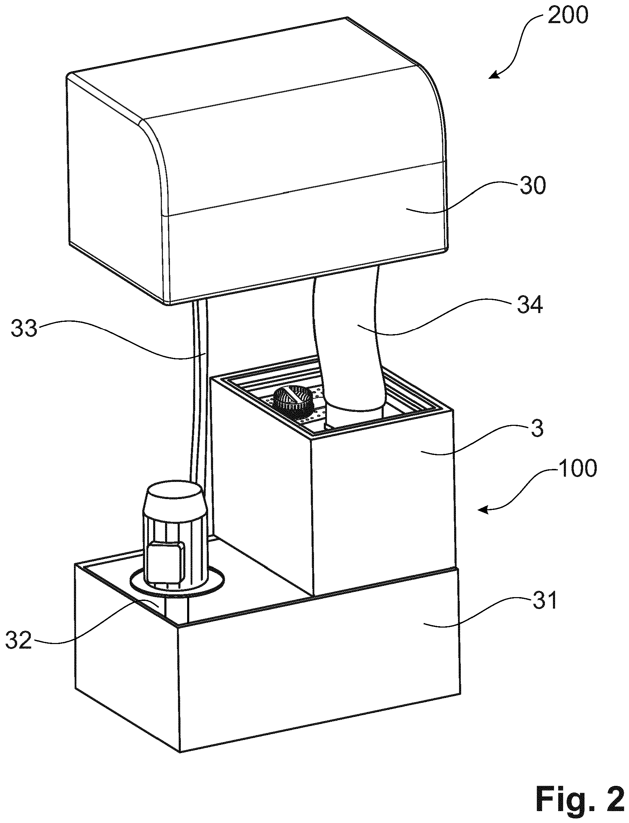

Wird eine große Menge an Schleifabwasser durch den Zulauf 1 auf die Verrieselungsplatte 9 geleitet, die nicht schnell genug durch das Lochraster 10 verrieseln kann, dann kann eine Überschussmenge des Schleifabwassers durch eine obere Öffnung des Überlaufs 19, die in der Verrieselungsplatte 9 angeordnet ist, durch den Überlauf 19 hindurch abfließen und unterhalb des Behälters 3 aus einer unteren Öffnung des Überlaufs 19 austreten. Die untere Öffnung bildet somit einen Abfluss des Überlaufs 19. Die Überschussmenge an Schleifabwasser wird typischerweise in einem Behälter aufgefangen (z. B. dem Wasserreservoir 31 der Figur 2).

An der oberen Öffnung des Überlaufs 19 ist eine Grobfiltereinheit 20 eingesetzt, die größere Glaspartikel am Eindringen in den Überlauf 19 hindert. Der Grobfiltereinheit 20 kann aus der Überlauföffnung entnommen und gereinigt werden. In der dargestellten Ausführung weist die Grobfiltereinheit 20 einen Schieber 25 auf. Sie ist um ihre eigene Achse drehbar, wodurch der Schieber 25 über das Lochraster 10 der Verrieselungsplatte 9 bewegt wird. Dort anhaftende oder aufliegende Partikel werden hierdurch verschoben und somit wird das Lochraster wieder durchgängig. Mit dem Schieber 25 werden die Partikel in die Reinigungsöffnung 21 geschoben.

In der in Figur 1 gezeigten Ausführungsform der Filtereinrichtung 100 ist ferner eine Reinigungsöffnung 21 vorgesehen, die Teil der Aussparung 12 in der Lochplatte 10 ist. Während eines regulären Filtrationsvorgangs, bei dem Schleifabwasser durch die Verrieselungsplatte in den Filtersack 6 verrieselt wird, ist die Reinigungsöffnung 21 verschlossen, bzw. mit einem Grobfilter, bevorzugt der Grobfiltereinheit 20, abgedeckt. Während eines Reinigungsvorgangs zur Reinigung des Lochrasters 10 wird die Reinigungsöffnung 21 geöffnet und Ablagerungen auf dem Lochraster 10 können z. B. mit einem gesonderten Schieber (nicht gezeigt), der über die Verrieselungsplatte 9 verschiebbar ist, oder mit dem Schieber 25 der Grobfiltereinheit 20 zur Reinigungsöffnung 21 geschoben und durch diese in den Filtersack 6 entsorgt werden. Rückstände, die in der Grobfiltereinheit 20 aufgefangen wurden, können ebenfalls durch die Reinigungsöffnung 21 in den Filtersack 6 eingespeist werden. Als Grobfiltereinheit 20 eignet sich ein Rechen mit einem Zinkenabstand, der größere Partikel auffängt, z. B. mit einem Zinkenabstand von 2-20 mm.

In Figur 2 ist eine Ausführungsform einer Brillenglasschleifanlage nach der vorliegenden Erfindung dargestellt. Die Brillenglasschleifanlage 200 weist eine Brillenglasschleifeinheit 30, ein Wasserreservoir 31, eine Pumpe 32 zur Zuführung von Wasser aus dem Wasserreservoir 31 durch eine Zuflussleitung 33 zur Brillenglasschleifeinheit 30, einen Schleifabwasserablauf 34 und die Filtereinrichtung 100 mit dem Behälter 3 zum Auffangen von gefiltertem Wasser auf.

Bei einem Schleifprozess wird mittels der Pumpe 32 Wasser aus dem Wasserreservoir 31 durch die Zuflussleitung 33 zur Brillenglasschleifeinheit 30 gepumpt, um ein Nassschleifen eines Brillenglases durchführen zu können. Bei dem Schleifprozess fallen diverse Abfallpartikel und Schleifstaub an, die durch das Wasser abgespült und im Schleifabwasser durch den Schleifabwasserablauf 34 aus der Brillenglasschleifeinheit 30 abgeleitet werden.

Wie oben beschrieben, sind bei der Filtereinrichtung 100 der Zulauf 1, die Verrieselungsplatte 9, der Filtersack 6 und der Behälter 3 in Richtung der Schwerkraft untereinander angeordnet, sodass eine Schwerkraftfiltration vorliegt, bei der das Schleifabwasser durch Gravitation von der Verrieselungsplatte 9 in den Filtersack 6 gelangt und von dort durch den Filtereinsatz in den Behälter 3 abfließt. Es ist keine Pumpeinrichtung für die Filtration des Schleifabwassers erforderlich.

Der Schleifabwasserablauf 34 mündet in den Zulauf 1 der Filtereinrichtung, wie in Figur 1 dargestellt. Über den Zulauf 1 wird das Schleifabwasser auf die Verrieselungsplatte 9 geleitet, so dass sich das Schleifabwasser auf dem Lochraster 10 verteilt. Von dort rinnt das Schleifabwasser durch die Löcher des Lochrasters 10 und wird in den Filtersack 6 verrieselt. Gröbere Glaspartikel aus dem Schleifprozess passen nicht durch die Löcher des Lochrasters 10, so dass sie auf der Verrieselungsplatte 9 zurückgehalten werden. Steigt der Schleifabwasserpegel auf der Verrieselungsplatte 9 so stark an, dass er höher steht als die Höhe des Überlaufs 19 beträgt, so fließt überschüssiges Schleifabwasser über die obere Öffnung des Überlaufs 19 ab, wie oben beschrieben. Für den Fall, dass die Aussparung 12 und damit der Überlauf verstopft sein sollte, so kann überschüssiges Schleifabwasser über den Rand der Verrieselungsplatte 9 hinweg direkt in den Behälter 3 einlaufen.

Das Schleifabwasser wird über die gesamte Fläche der Verrieselungsplatte 9 in den Filtersack 6 verrieselt. Dabei dient der Filtereinsatz 16 als Basis für einen Bodenbereich des Filtersacks 6, sodass sich Schleifstaub aus dem Schleifabwasser verteilt über die gesamte Bodenfläche des Filtereinsatzes 16, die mit dem Filtersack 6 bedeckt ist, absetzen kann. Der Schleifstaub und kleinere Partikel verbleiben als Abraum im Filtersack 6 während das Wasser durch das textile Material rinnt und gefiltert durch die Schlitze 17 des Filtereinsatzes in den Behälter 3 abfließt. Von dort wird das gefilterte Wasser über den Ablauf 5 dem Wasserreservoir 31 zugeführt und steht wieder als sauberes Schleifwasser für einen Schleifprozess der Brillenglasschleifeinheit 30 zur Verfügung. Bei der Brillenglasschleifanlage 200 liegt somit eine kontinuierliche Wasserreinigung vor. Das Wasser kann praktisch unendlich im Kreis geführt werden. Es gelangen keine Schleifabfälle in die Umwelt, sondern der Filtersack 6 wird von Zeit zu Zeit manuell gereinigt, indem die darin gesammelten Abfälle entnommen und fachgerecht entsorgt werden.

Bei der Wartung der Brillenglasschleifanlage 200 kann die Filtereinrichtung in einfacher Weise von der Zuflussleitung 33 und vom Schleifabwasserablauf 34 getrennt werden. Die Verrieselungsplatte 9 kann vom Filtersack 6 abgenommen und der Filtereinsatz 16 aus dem Behälter 3 gehoben werden. Der Filtersack 6 kann aus dem Filtereinsatz 16 entnommen und gereinigt oder ausgetauscht werden. Anschließend kann die Filtereinrichtung wieder zusammengesetzt und an die Brillenglasschleifeinheit 30 angeschlossen werden.

### Bezugszeichenliste

- 1: Zulauf
- 2: Filtereinheit
- 3: Behälter
- 4: Behälteröffnung
- 5: Ablauf
- 6: Filtersack
- 7: Sacköffnung
- 8: Fortsatz
- 9: Verrieselungsplatte
- 10: Lochraster
- 11: Umfangsrand
- 12: Aussparung
- 13: Stützträger
- 14: Anschlusskanal
- 15: Stützen
- 16: Filtereinsatz
- 17: Schlitze
- 18: Umfangskante
- 19: Überlauf
- 20: Grobfiltereinheit
- 21: Reinigungsöffnung
- 22: Abstandshalter
- 23: Boden des Filtereinsatzes
- 24: Bund
- 25: Schieber
- 30: Brillenglasschleifeinheit
- 31: Wasserreservoir
- 32: Pumpe
- 33: Zuflussleitung
- 34: Schleifabwasserablauf
- 35: oberer Rand des Filtereinsatzes
- 36: Oberkante des Behälters
- 100: Filtereinrichtung
- 200: Brillenglasschleifanlage
- h: Außenhöhe des Filtereinsatzes
- H: Innenhöhe des Behälters

## Patentansprüche

1. Filtereinrichtung zur Filtration von Schleifstaub, insbesondere von Glasschleifstaub, der beim Schleifen von Brillengläsern entsteht, aus Schleifabwasser, die einen Zulauf (1) zur Zuführung von Schleifabwasser zu einer Filtereinheit (2) zur Filtration des Schleifabwassers sowie einen Behälter (3) mit einer Behälteröffnung (4) zum Einsetzen der Filtereinheit (2) und einem Ablauf (5) für gefiltertes Wasser aufweist,
wobei die Filtereinheit (2) einen Filtersack (6) aus textilem Material mit einer Sacköffnung (7) umfasst, der in die Behälteröffnung (4) des Behälters (3) einsetzbar ist,
**dadurch gekennzeichnet, dass**
die Filtereinheit eine Verrieselungsplatte (9) mit einem Lochraster (10) mit Löchern, die einen Durchmesser von 2-10 mm aufweisen, über der Sacköffnung (7) umfasst,
wobei der Zulauf (1) auf die Verrieselungsplatte (9) mündet,
sodass Schleifabwasser verteilt auf der Verrieselungsplatte (9) über das Lochraster (10) in den Filtersack (6) gelangt, wobei Schleifstaub aus dem Schleifabwasser in dem Filtersack (6) zurück bleibt und gefiltertes Wasser durch den Filtersack (6) in den Behälter (3) gelangt,
und wobei die Verrieselungsplatte (9) schalenartig zur Aufnahme einer vorbestimmten Menge an Schleifabwasser ausgebildet ist.

2. Filtereinrichtung nach Anspruch 1, **dadurch gekennzeichnet, dass** der Zulauf (1), die Verrieselungsplatte (9), der Filtersack (6) und der Behälter (3) in Richtung der Schwerkraft untereinander angeordnet sind, sodass eine Schwerkraftfiltration vorliegt.

3. Filtereinrichtung nach Anspruch 1 oder 2, **dadurch gekennzeichnet, dass** sich die Behälteröffnung (4) im Wesentlichen über eine Oberseite des Behälters (3) erstreckt und das Lochraster (10) der Verrieselungsplatte (9) über oder in der Behälteröffnung (4) angeordnet ist und sich im Wesentlichen über ihre gesamte Fläche erstreckt.

4. Filtereinrichtung nach einem der vorhergehenden Ansprüche, **dadurch gekennzeichnet, dass** ein Filtereinsatz (16) aus festem Material mit einer Vielzahl an Öffnungen, insbesondere mit Schlitzen (17) oder kreisrunden Löchern, vorgesehen ist, der in dem Behälter (3) angeordnet ist und der den Filtersack (6) aufnimmt.

5. Filtereinrichtung nach einem der vorhergehenden Ansprüche, **dadurch gekennzeichnet, dass** ein Überlauf (19) vorgesehen ist, über den eine Überschussmenge an zulaufendem Wasser von der Verrieselungsplatte (9) ableitbar ist.

6. Filtereinrichtung nach Anspruch 5, **dadurch gekennzeichnet, dass** der Überlauf (19) eine Grobfiltereinheit (20), insbesondere in der Art eines Rechens, aufweist, die Grobpartikel aus dem Schleifabwasser zurückhält.

7. Filtereinrichtung nach den vorhergehenden Ansprüchen 5 oder 6, **dadurch gekennzeichnet, dass** sich der Überlauf (19) ausgehend von der Verrieselungsplatte (9) durch den Behälter (3) erstreckt und in einen Abfluss mündet.

8. Filtereinrichtung nach dem vorhergehenden Anspruch, **dadurch gekennzeichnet, dass** der Filtersack (6) einen schlauchartigen Fortsatz (8) aufweist, durch den sich der Überlauf (19) innerhalb des Behälters (3) erstreckt.

9. Filtereinrichtung nach einem der Ansprüche 4 bis 8, **dadurch gekennzeichnet, dass** der Filtereinsatz (16) in dem Behälter von einem Boden des Behälters (3) beabstandet eingesetzt ist, insbesondere indem der Filtereinsatz bodenseitig zumindest einen Abstandshalter, insbesondere in Form von Kufen, aufweist, oder indem ein oberer Rand (35) des Filtereinsatzes (16) umgebördelt oder abgekantet ist und eine Umfangskante (18) bildet, so dass der Filtereinsatz (16) mit dem oberen Rand auf einer Oberkante (36) des Behälters (3) aufliegt, wobei eine Außenhöhe (h) des Filtereinsatzes (16) kleiner ist als eine Innenhöhe (H) des Behälters (3).

10. Filtereinrichtung nach einem der vorhergehenden Ansprüche, **dadurch gekennzeichnet, dass** die Verrieselungsplatte (9) eine Reinigungsöffnung (21) aufweist und dass insbesondere ein Schieber (25) vorgesehen ist, mit welchem auf der Verrieselungsplatte angesammelte Grobpartikel von derselben entfernbar sind, insbesondere indem die Grobpartikel mit dem Schieber in die Reinigungsöffnung verschiebbar sind.

11. Filtereinrichtung nach Anspruch 10, **dadurch gekennzeichnet, dass** durch die Reinigungsöffnung (21) der Verrieselungsplatte (9) der Überlauf (19) hindurchführt und in ihr der Grobfilter (20) angeordnet ist, wobei insbesondere der Grobfilter einen Schieber aufweist und axial drehbar ist, so dass durch Drehung des Grobfilters auf der Verrieselungsplatte angesammelte Grobpartikel mit dem Schieber in die Reinigungsöffnung verschiebbar sind.

12. Filtereinrichtung nach einem der vorhergehenden Ansprüche, **dadurch gekennzeichnet, dass** das textile Material des Filtersacks (6) aus einem Gewebe, insbesondere aus einem Polyestergewebe oder Nylongewebe, besteht.

13. Brillenglasschleifanlage (200) zum Nassschleifen von Brillenglas, die eine Filtereinrichtung (100) gemäß einem der vorstehenden Ansprüche umfasst.

14. Brillenglasschleifanlage (200) nach Anspruch 13, **dadurch gekennzeichnet, dass** die Brillenglasschleifanlage wenigstens eine Brillenglasschleifeinheit (30), ein Wasserreservoir (31), zumindest eine Pumpe (32) zur Zuführung von Wasser aus dem Wasserreservoir (31) zur Brillenglasschleifeinheit (30), einen Schleifabwasserablauf und die Filtereinrichtung (100) mit dem Behälter (3) zum Auffangen von gefiltertem Wasser umfasst, wobei gefiltertes Wasser von dem Behälter (3) der Filtereinrichtung in das Wasserreservoir (31) geführt wird und so erneut der Brillenglasschleifeinheit (30) zugeführt werden kann, wodurch ein im Wesentlichen geschlossener Wasserkreislauf vorliegt.

## Claims

1. Filter device for filtering grinding dust, in particular glass grinding dust produced when grinding eyeglass lenses, out of grinding wastewater, said filter device comprising an inlet (1) for supplying grinding wastewater to a filter unit (2) for filtering the grinding wastewater, a container (3) having a container opening (4) for insertion of the filter unit (2), and an outlet (5) for filtered water,
wherein the filter unit (2) comprises a filter bag (6) made of textile material having a bag opening (7), which filter bag can be inserted into the container opening (4) of the container (3),
**characterized in that**
the filter unit comprises, above the bag opening (7), a trickle plate (9) having a hole pattern (10) comprising holes having a diameter of 2-10 mm,
wherein the inlet (1) opens onto the trickle plate (9),
such that grinding wastewater is distributed on the trickle plate (9) and enters the filter bag (6) via the hole pattern (10), wherein grinding dust from the grinding wastewater remains in the filter bag (6) and filtered water passes through the filter bag (6) into the container (3),
and wherein the trickle plate (9) is designed in a dish-shaped manner in order to receive a predetermined quantity of grinding wastewater.

2. Filter device according to claim 1, **characterized in that** the inlet (1), the trickle plate (9), the filter bag (6) and the container (3) are arranged one below the other in the direction of gravity, so that gravity filtration takes place.

3. Filter device according to claim 1 or 2, **characterized in that** the container opening (4) extends substantially across a top side of the container (3) and the hole pattern (10) of the trickle plate (9) is arranged above or in the container opening (4) and extends substantially across the entire surface area thereof.

4. Filter device according to any one of the preceding claims, **characterized in that** a filter insert (16) made of solid material having a plurality of openings, in particular slits (17) or circular holes, is provided, which is arranged in the container (3) and receives the filter bag (6).

5. Filter device according to any one of the preceding claims, **characterized in that** an overflow (19) is provided, via which an excess quantity of inflowing water can be routed away from the trickle plate (9).

6. Filter device according to claim 5, **characterized in that** the overflow (19) has a coarse filter unit (20), in particular in the manner of a rake, which retains coarse particles from the grinding wastewater.

7. Filter device according to the preceding claims 5 or 6, **characterized in that** the overflow (19) extends from the trickle plate (9) through the container (3) and opens into a drain.

8. Filter device according to the preceding claim, **characterized in that** the filter bag (6) has a tubular projection (8), through which the overflow (19) extends inside the container (3).

9. Filter device according to any one of claims 4 to 8, **characterized in that** the filter insert (16) is inserted in the container at a distance from a bottom of the container (3), in particular by virtue of the filter insert having at least one spacer, in particular in the form of skids, on the bottom side, or by virtue of an upper edge (35) of the filter insert (16) being flanged or bent and forming a peripheral rim (18), such that the filter insert (16) rests with the upper edge on an upper rim (36) of the container (3), wherein an external height (h) of the filter insert (16) is smaller than an internal height (H) of the container (3).

10. Filter device according to any one of the preceding claims, **characterized in that** the trickle plate (9) has a cleaning opening (21), and **in that** in particular a slider (25) is provided, by which coarse particles that have accumulated on the trickle plate can be removed from the latter, in particular by virtue of the coarse particles being able to be moved into the cleaning opening by the slider.

11. Filter device according to claim 10, **characterized in that** the overflow (19) passes through the cleaning opening (21) of the trickle plate (9) and the coarse filter (20) is arranged in there, wherein in particular the coarse filter has a slider and is axially rotatable such that, by rotating the coarse filter, coarse particles that have accumulated on the trickle plate can be moved into the cleaning opening by the slider.

12. Filter device according to any one of the preceding claims, **characterized in that** the textile material of the filter bag (6) consists of a fabric, in particular a polyester fabric or nylon fabric.

13. Eyeglass lens grinding system (200) for the wet grinding of eyeglass lenses, comprising a filter device (100) according to any one of the preceding claims.

14. Eyeglass lens grinding system (200) according to claim 13, **characterized in that** the eyeglass lens grinding system comprises at least one eyeglass lens grinding unit (30), a water reservoir (31), at least one pump (32) for supplying water from the water reservoir (31) to the eyeglass lens grinding unit (30), a grinding wastewater outlet, and the filter device (100) with the container (3) for collecting filtered water, wherein filtered water is routed from the container (3) of the filter device into the water reservoir (31) and thus can be fed back to the eyeglass lens grinding unit (30), resulting in a substantially closed water circuit.

## Revendications

1. Dispositif de filtre destiné à la filtration de poussière de ponçage, en particulier de poussière de ponçage de verre, qui résulte du ponçage de verres de lunettes, provenant d'une eau résiduelle de ponçage, qui présente une admission (1) pour l'amenée d'une eau résiduelle de ponçage vers une unité de filtre (2) pour la filtration de l'eau résiduelle de ponçage ainsi qu'un récipient (3) avec une ouverture de récipient (4) pour l'insertion de l'unité de filtre (2) et une évacuation (5) pour de l'eau filtrée,
dans lequel l'unité de filtre (2) comprend un sac filtrant (6) dans un matériau textile avec une ouverture de sac (7), lequel peut être inséré dans l'ouverture de récipient (4) du récipient (3),
**caractérisé en ce que**
l'unité de filtre (2) comprend par-dessus l'ouverture de sac (7) une plaque d'infiltration (9) avec une trame perforée (10) avec des perforations qui présentent un diamètre de 2-10 mm, dans lequel l'admission (1) débouche sur la plaque d'infiltration (9),
de sorte que l'eau résiduelle de ponçage parvienne dans le sac filtrant (6) via la trame perforée (10) en étant répartie sur la plaque d'infiltration (9), dans lequel de la poussière de ponçage provenant de l'eau résiduelle de ponçage demeure dans le sac filtrant (6) et de l'eau filtrée parvient dans le récipient (3) via le sac filtrant (6),
et dans lequel la plaque d'infiltration (9) est conçue en forme de coque pour la réception d'une quantité prédéterminée d'eau résiduelle de ponçage.

2. Dispositif de filtre selon la revendication 1, **caractérisé en ce que** l'admission (1), la plaque d'infiltration (9), le sac filtrant (6) et le récipient (3) sont agencés les uns sous les autres dans le sens de la pesanteur, de sorte que se présente une filtration par pesanteur.

3. Dispositif de filtre selon la revendication 1 ou 2, **caractérisé en ce que** l'ouverture de récipient (4) s'étend essentiellement par-dessus un côté supérieur du récipient (3) et la trame perforée (10) de la plaque d'infiltration (9) est agencée par-dessus ou dans l'ouverture de récipient (4) et s'étend essentiellement sur l'ensemble de sa surface.

4. Dispositif de filtre selon l'une des revendications précédentes, **caractérisé en ce qu'**une cartouche filtrante (16) dans un matériau solide est prévue avec une pluralité d'ouvertures, en particulier avec des fentes (17) ou des perforations circulaires, qui est agencée dans le récipient (3) et qui réceptionne le sac filtrant (6).

5. Dispositif de filtre selon l'une des revendications précédentes, **caractérisé en ce qu'**est prévu un trop-plein (19) via lequel une quantité excédentaire d'eau entrante peut être déviée par la plaque d'infiltration (9).

6. Dispositif de filtre selon la revendication 5, **caractérisé en ce que** le trop-plein (19) présente une unité de filtre grossier (20), en particulier du type d'une grille, qui retient des particules grossières provenant de l'eau résiduelle de ponçage.

7. Dispositif de filtre selon les revendications précédentes 5 ou 6, **caractérisé en ce que**, partant de la plaque d'infiltration (9), le trop-plein (19) s'étend - à travers le récipient (3) et débouche dans un écoulement.

8. Dispositif de filtre selon la revendication précédente, **caractérisé en ce que** le sac filtrant (6) présente un prolongement (8) tubulaire à travers lequel le trop-plein (19) s'étend à l'intérieur du récipient (3).

9. Dispositif de filtre selon l'une des revendications 4 à 8, **caractérisé en ce que** la cartouche filtrante (16) dans le récipient est insérée à distance d'un fond du récipient (3), en particulier **en ce que** la cartouche filtrante présente du côté du fond au moins un espaceur, en particulier sous la forme de patins, ou **en ce qu'**un bord supérieur (35) de la cartouche filtrante (16) est bordé ou chanfreiné et forme une bordure périphérique (18), de sorte que la cartouche filtrante (16) repose avec le bord supérieur sur la bordure supérieure (36) du récipient (3), dans lequel une hauteur extérieure (h) de la cartouche filtrante (16) est inférieure à une hauteur intérieure (H) du récipient (3).

10. Dispositif de filtre selon l'une des revendications précédentes, **caractérisé en ce que** la plaque d'infiltration (9) présente une ouverture de nettoyage (21) et **en ce qu'**en particulier est prévu un pousseur (25) avec lequel des particules grossières agglomérées sur la plaque d'infiltration peuvent être éloignées de celle-ci, en particulier **en ce que** les particules grossières peuvent être poussées jusque dans l'ouverture de nettoyage avec le pousseur.

11. Dispositif de filtre selon la revendication 10, **caractérisé en ce que** le trop-plein (19) passe à travers l'ouverture de nettoyage (21) de la plaque d'infiltration (9) et le filtre grossier (20) est agencé dans celle-ci, dans lequel en particulier le filtre grossier présente un pousseur et peut être tourné axialement, de sorte que des particules grossières agglomérées sur la plaque d'infiltration puissent être poussées jusque dans l'ouverture de nettoyage avec le pousseur via la rotation du filtre grossier.

12. Dispositif de filtre selon l'une des revendications précédentes, **caractérisé en ce que** le matériau textile du sac filtrant (6) est composé d'un tissu, en particulier d'un tissu en polyester ou d'un tissu en nylon.

13. Installation de ponçage de verres de lunettes (200) pour le ponçage humide de verres de lunettes, qui comprend un dispositif de filtre (100) selon l'une des revendications précédentes.

14. Installation de ponçage de verres de lunettes (200) selon la revendication 13, **caractérisée en ce que** l'installation de ponçage de verres de lunettes comprend au moins une unité de ponçage de verres de lunettes (30), un réservoir d'eau (31), au moins une pompe (32) pour l'amenée d'eau provenant du réservoir d'eau (31) vers l'unité de ponçage de verres de lunettes (30), une évacuation d'eau résiduelle de ponçage et le dispositif de filtre (100) avec le récipient (3) pour la capture d'eau filtrée, dans lequel une eau filtrée est guidée depuis le récipient (3) du dispositif de filtre jusque dans le réservoir d'eau (31) et peut ainsi de nouveau être guidée vers l'unité de ponçage de verres de lunettes (30), moyennant quoi est créé un circuit d'eau essentiellement fermé.
